# EUROPEAN PATENT APPLICATION

(11) **EP 1 469 634 A1**
(43) Date of publication of application: **20.10.2004**
(21) Application number: 03101029.1
(22) Date of filing: 16.04.2003
(51) Int. Cl.: H04L 12/24

(54) **Processing measurement data relating to an application process**

(71) Applicant: Agilent Technologies, Inc., Palo Alto, CA 94306 (US)
(72) Inventor: Müller, Volker, 71034, Böblingen (DE); Schroth, Albrecht, 71034, Böblingen (DE)
(74) Representative: Barth, Daniel

(57) **Abstract**

In a system, a server (20) is coupled to one or more clients (50), a database (40), and one or more measurement units (10). Each measurement unit (10) is adapted for deriving measurement data comprising at least one of a group comprising: measurement results, measurement events, and measurement alarms. For processing measurement data, the server (20) receives measurement data from one or more of the measurement units (10), wherein the received measurement data is relating to an application process. A database content stored in the database (40) and relating to the application process is derived, and the received measurement data is processed in conjunction with the derived database content in order to derive therefrom an application process information relating to the application process. The application process information is then provided to one or more of the clients (50).

## Description

### BACKGROUND OF THE INVENTION

Network Management Systems are provided for managing physical networks, such as telecommunication networks, having a plurality of (e.g. electrical and/or optical) components interconnected by (e.g. electrical and/or optical) connections (such as electrical cables or optical fibers). Measurement units can be provided within the physical network, e.g. for gathering measurement data from the physical network. Such measurement data may be provided to a central database. Various applications coupled to the database might fetch data from the database for further processing.

### SUMMARY OF THE INVENTION

It is an object of the present invention to provide an improved processing of measurement data. This object is solved by the independent claims. Preferred embodiments are shown by the dependent claims.

According to the present invention, measurement data is processed in a system having a server coupled to one or more clients, to a database, and to one or more measurement units. Each measurement unit allows deriving measurement data, such as measurement results, measurement events, and measurement alarms.

In operation, the server receives measurement data from one or more of the measurement units, wherein the received measurement data is relating to an application process. Each measurement unit is provided for gathering measurement data. Examples of measurement units can be optical time domain reflectometers (OTDR), bit error ratio testers (BERT), optical spectrum analyzers (OSA), optical power meters (OPM), etc. Each measurement unit might further comprise a processing unit adapted for providing one or more of the following: managing communication to the server, analyzing the measurement data, executing measurements periodically or according to predefined period/s of time or intervals, storing data (e.g. on the measurement unit) for further processing, controlling other optional modules in the measurement unit like an optical switch, etc.

The application process can be any process relating to an application in the system and involves one or more measurements leading to certain measurement data. The application process further involves utilization of stored database content relating to the system, whereby certain application process information is derived from the measurement data in conjunction with the database content. Examples of application processes can be monitoring a network link, analyzing measurement data, locating a fault (such as a network fault) e.g. geographically, distributing a measurement alarm or status thereof to a respective number of clients, etc.

For processing the application process, the server derives the database content stored in the database, which relates to the application process. The server then processes the received measurement data in conjunction with the derived database content and derives therefrom the application process information. The application process information represents such information with either one or both the content of measurement data and database content, related to each other by the application process. The server then provides the application process information to one or more of the clients.

Examples for application process information can be, in case of OTDR measurements, the OTDR trace data, information about the time, date and the location of the measurement, event information derived from the OTDR trace data, the result of comparing different sets of measurement data, information about the network link where the OTDR measurement belongs to, information about the geographic path of the measured network link, information about the geographic fault location in case of a measurement alarm status, etc.

In one embodiment, the system is a network management system provided for managing a physical network. Such physical network can be any kind of network, wherein one or more components are interconnected with each other. Preferably, the physical network is a telecommunication network, wherein a plurality of (e.g. optical and/or electrical) components is coupled by (e.g. optical and/or electrical) paths (such as fiber connections, wired and/or wireless connections, etc.). Preferably, the measuring units are provided for deriving measurement data from such physical network.

In one embodiment, the database can comprise content of one or more of the following: Information about the physical network, information about components of or within the physical network, information about the characteristic or properties of components in the physical network, topology information relating to the topology of components in the physical network such as connections, locations, or other kind of information about what components coupled or connected to each other, geographic information relating to the geographic distribution of components in the physical network, information about measuring events or measuring alarms occurred in the physical network, time information about a time relating to a specific information, an origin information about the source where a specific information originates from.

In one embodiment, processing the received measurement data can be accomplished e.g.: by correlating and/or gathering measurement events and/or measurement alarms, by adding topology information and/or geographic information as the derived database content to the received measurement data.

While the server can provide the application process information to all of the clients coupled to the server, the server might also limit provision of the application process information (e.g. to one or more clients only) or in such a way that one or more clients receive only partial application process information, or that one or more clients receive no application process information at all. Preferably, the clients receive only as much application process information as they need to provide a specific application, e.g. only such clients having a need to receive the respective application process information.

In a preferred embodiment, the clients are categorized into client types. For each client type, the server determines (preferably by using a dedicated program) whether the application process information is to be sent to this client type and/or whether the application process information is to be only in parts and what a part is to be sent. Each client or application on the client preferably registers its client type at the server, e.g. each time it is started.

The server might also store the received measurement data and/or the application process information in the database.

In a preferred embodiment, the server provides the processing of the measurement data in a 'unidirectional' manner, so that the server provides complete information to the respective client. In such case, an application on the client receiving such application process information does not have to derive further information from the database and/or a respective one or more of the measurement units for operating or processing the application process information. Since each client preferably has to register its client type at the server (e.g. during startup), the programs on the server can compile for each client exactly such application process information that it needs to provide a specific application.

In one embodiment, software programs or routines on the server are logically organized in a layered architecture, such that a program or a routine at layer n-1 can supply data to a program or routine at layer n which uses this data to derive further data it supplies to a program or routine at layer n+1.

The invention can be partly or entirely embodied or supported by one or more suitable software programs, which can be stored on or otherwise provided by any kind of data carrier, and which might be executed in or by any suitable data processing unit.

Software programs or routines are preferably applied, by the measurement units, e.g. to manage communication with the server, to analyze measurement data, to control the periodic execution of measurements, to control additional modules on the measurement unit, etc. The server preferably applies software programs or routines e.g. to communicate to the measurement units, to analyze measurement data, to derive data from the database, to store data in the database, to communicate with the clients, etc. The clients preferably apply software programs or routines e.g. to raise alarms, to display the measurement information, to display data derived from the database, to display the analysis of the measurement information, etc.

### BRIEF DESCRIPTION OF THE DRAWINGS

Other objects and many of the attendant advantages of the present invention will be readily appreciated and become better understood by reference to the following detailed description when considering in connection with the accompanied drawing(s). Features that are substantially or functionally equal or similar will be referred to with the same reference sign(s).

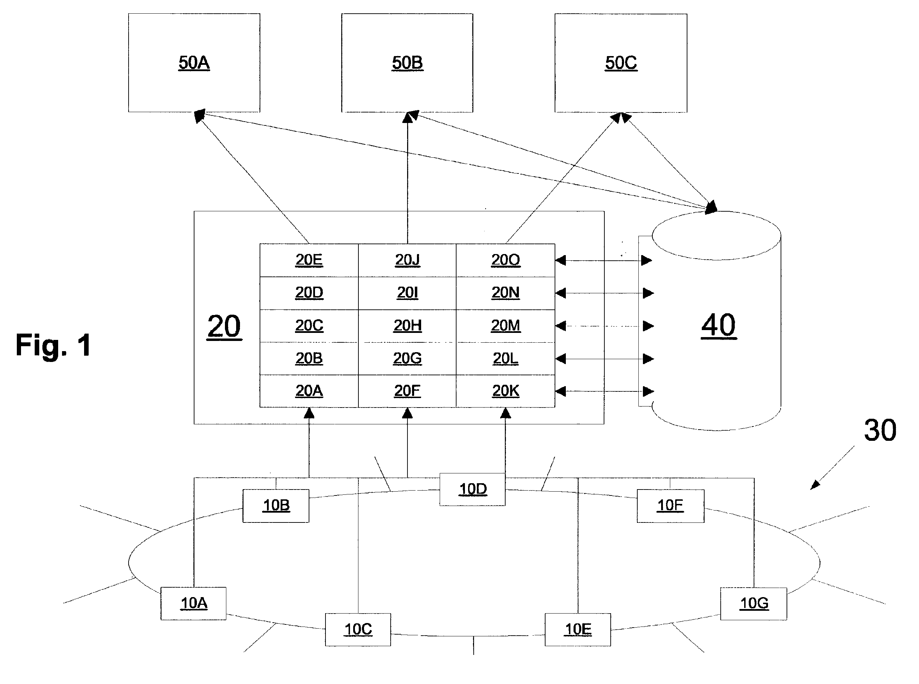

Figure 1 shows a preferred embodiment of a network management system according to the present invention.

### DETAILED DESCRIPTION OF EMBODIMENTS OF THE INVENTION

In Figure 1, a plurality of measurement units 10A, 10B, ..., 10F are coupled to a server 20. Each measurement unit 10 allows deriving measurement data from a physical network 30. While the physical network 30 can be any kind of network, it preferably a telecommunication network with a plurality of components interconnected by optical and/or electrical paths as well-known in the art. Accordingly, each measurement units 10 can be any kind of measurement units allowing providing a measurement in such physical network 30, such as an ODTR, bit error ratio tester (BERT), optical spectrum analyzer (OSA), optical power meter (OPM), etc. The server 20 is further coupled to a database 40 and to a plurality of clients 50A, 50B and 50C. Each client 50 hosts one or more applications, which will be illustrated later.

The database 40 allows storing various information, in particular information about the physical network, such as information about the components, topology or geographic distribution of components, measurements data received from the measurement units or other information derived there from, etc.

The server 20 hosts a plurality of programs 20i (with i = A, B, C, ..., etc.), each allowing to run a specific task on the server 20. These tasks may comprise receiving measurement data from the measuring units, analyzing measurement data, correlating the measurement to network link information, correlating the measurement to geographic information but are not limited to these.

The measurement unit 10, e.g. a measurement unit comprising an OTDR and a processing unit, performs a measurement according to the measurement task defined on this measurement unit, such as an instruction to execute a measurement once every hour for example. The measurement unit 10 may also analyze the resulting measurement data, e.g. in order to detect a fiber break. The measurement unit 10 then sends the measurement data, e.g. an OTDR trace, and, as far as available, information about location and time, the date of the measurement, and analysis data to the server 20.

An example of a hierarchical processing in the server 20 shall now be illustrated, wherein the programs 20i are organized in a hierarchical manner.

On the server, a program 20A receives the measurement information from the respective measurement unit 10. The program 20A, which receives the measurement information, decides whether this measurement data will be stored in the database 40 or not and, if it needs to be stored in the database, will store it. Alternatively, only such measurement information resulting in an alarm or a warning during analysis on the measurement unit 10 might be stored.

Another program 20B might then take the data received from the program 20A and might analyze the measurement data in more detail. Depending on the results of this analysis, the program 20B can then store some or all of the results in the database 40. Results of such analysis can be, for example, the optical distance X of a fiber break from a start location, or the detection of an unusual attenuation of a signal in the fiber triggering a warning.

A further program 20C might take the data from the program 20A or 20B and can correlate information derived from the database 40, e.g. about the network topology, to the measurement data. This could be, for example, information about a start location of the fiber this measurement belongs to, information about an end location of the fiber, information about additional passive optical components connected to the fiber, etc.

Another program 20D might take the data from program 20C and can correlate geographic information derived from the database 40 to the measurement data. This data can include, for example, the geographic position of the start point of the fiber, of the end point of the fiber, additional geographic positions the fiber passes, which are necessary to determine the correct geographic path of the fiber. This can also include the geographic position of a fiber break.

Another program 20E can then take such application process data from program 20D and uses information about the currently connected clients 50 to send the application process data received from program 20D, or depending on the client type only parts thereof, to all the clients 50 that need this data. Some clients 50, which for example are only used for planning purposes, may not receive this application process data.

A program on the client 50A may then use the received application process data to display such application process data in an appropriate viewer, for example an OTDR trace viewer, to raise an alert, e.g. by playing a sound or displaying a message, to include the new measurement information into an event list on a client which displays the current status and the status history of the network 30, etc.

## Claims

1. A method for processing measurement data in a system, wherein:
• a server (20) is coupled to one or more clients (50), a database (40), and one or more measurement units (10), and
• each measurement unit (10) is adapted for deriving measurement data comprising at least one of a group comprising: measurement results, measurement events, and measurement alarms,
the method comprising the following steps executed by the server (20):
a) receiving measurement data from one or more of the measurement units (10), wherein the received measurement data is relating to an application process,
a) deriving a database content stored in the database (40) and relating to the application process,
b) processing the received measurement data in conjunction with the derived database content in order to derive therefrom an application process information relating to the application process, and
c) providing the application process information to one or more of the clients (50).

2. The method of claim 1 or any one of the above claims, comprising at least one of the following features:
• the system is a network management system adapted for managing a physical network (30),
• each measurement unit (10) is adapted for deriving measurement data from the physical network (30),
• the database (40) comprises at least one of the following group comprising:
o information about the physical network (30),
o information about components of the physical network (30),
o information about the characteristic of components of the physical network (30),
o information about physical properties of components in the physical network (30),
o topology information relating to the topology of components in the physical network (30),
o geographic information relating to the geographic distribution of components in the physical network (30),
o information about one or more measuring events occurred in the physical network (30),
o information about one or more measuring alarms occurred in the physical network (30),
o time information about a time relating to a specific information,
o origin information about the source where a specific information originates from.

3. The method of claim 1 or any one of the above claims, wherein the step c) of processing comprises at least one of the following steps:
• correlating at least one of a group comprising measuring events and measuring alarms,
• gathering at least one of a group comprising measuring events and measuring alarms relating to the application process,
• adding topology information as the derived database content to the received measurement data,
• adding geographic information as the derived database contentto the received measurement data.

4. The method of claim 1 or any one of the above claims, wherein the step d) of providing the application process information to one or more of the clients (50) comprises one of the following steps:
• providing the application process information, or parts thereof, to all of the clients (50),
• providing the application process information, or parts thereof, only to such clients (50) having a need to receive the application process information.

5. The method of claim 1 or any one of the above claims, further comprising a step of storing at least one of the received measurement data and the application process information in the database (40).

6. The method of claim 1 or any one of the above claims, wherein the processing of the measurement data is provided unidirectionally, so that an application on the client (50) receiving the application process information in step d) does not have to derive further information from at least one of the database (40) and a respective measurement unit.

7. A software program or product, preferably stored on a data carrier, for executing the method of claim 1 or any one of the above claims, when run on a data processing system such as a computer.

8. A system for processing measurement data, comprising a server (20) coupled to one or more clients (50), a database (40), and one or more measurement units (10), wherein:
• each measurement unit (10) is adapted for deriving measurement data comprising at least one of a group comprising: measurement results, measurement events, and measurement alarms, and
• the server (20) is adapted for:
o receiving measurement data from one or more of the measurement units (10), wherein the received measurement data is relating to an application process,
o deriving a database content stored in the database (40) and relating to the application process,
o processing the received measurement data in conjunction with the derived database content in order to derive therefrom an application process information relating to the application process, and
o providing the application process information, or parts thereof, to one or more of the clients (50).

9. The system of claim 8, further comprising at least one of: the one or more clients (50), the database (40), and the one or more measurement units (10).
